# EUROPÄISCHE PATENTSCHRIFT

(11) **EP 3 155 603 B1**
(45) Veröffentlichungstag und Bekanntmachung des Hinweises auf die Patenterteilung: **23.09.2020**
(21) Anmeldenummer: 15719145.3
(22) Anmeldetag: 24.04.2015
(51) Int. Cl.: G08G 1/04, G08G 1/16, B60K 35/00

(54) **VERFAHREN ZUR ERMITTLUNG VON POSITIONSDATEN ZUR NUTZUNG BEIM BETRIEB EINES FAHRZEUGSYSTEMS EINES KRAFTFAHRZEUGS UND POSITIONSDATENERMITTLUNGS- UND -VERTEILUNGSSYSTEM**
METHOD FOR DETERMINING POSITION DATA FOR USE DURING THE OPERATION OF A VEHICLE SYSTEM OF A MOTOR VEHICLE, AND POSITION-DATA DETERMINING AND DISTRIBUTING SYSTEM
PROCÉDÉ DE DÉTERMINATION DE DONNÉES DE POSITION À UTILISER LORS DE L'EXPLOITATION D'UN SYSTÈME DE VÉHICULE D'UN VÉHICULE AUTOMOBILE AINSI QUE SYSTÈME DE DÉTERMINATION ET DE DISTRIBUTION DE DONNÉES DE POSITION

(30) Priorität: 12.06.2014 DE 102014008578
(43) Veröffentlichungstag der Anmeldung: 19.04.2017
(73) Patentinhaber: Audi AG, 85045 Ingolstadt (DE)
(72) Erfinder: ALTINGER, Harald, 85049 Gerolfing (DE); SCHULLER, Florian, 85737 Ismaning (DE); IBISCH, Andre, 44225 Dortmund (DE)
(74) Vertreter: Thielmann, Frank
(86) Internationale Anmeldenummer: PCT/EP2015/000851
(87) Internationale Veröffentlichungsnummer: WO 2015/188905

(56) Entgegenhaltungen:
- DE-A1-102007 032 814
- US-A1- 2010 100 324
- US-A1- 2010 100 325
- US-A1- 2014 063 196

## Beschreibung

Die Erfindung betrifft ein Verfahren zur Ermittlung von Positionsdaten zur Nutzung beim Betrieb eines Fahrzeugsystems eines Kraftfahrzeugs sowie ein Positionsdatenermittlungs- und -verteilungssystem.

Fahrzeugsysteme moderner Kraftfahrzeuge, beispielsweise Fahrerassistenzsysteme, nutzen eine Vielzahl von aus Sensordaten abgeleiteten Informationen, um ihre jeweiligen Funktionen erfolgreich durchzuführen. Eine wichtige Art solcher Informationen sind Positionsdaten, seien sie auf das eigene Kraftfahrzeug oder auf andere Verkehrsteilnehmer/Objekte bezogen. Positionsdaten anderer Objekte in einer Umgebung um das Kraftfahrzeug herum können jedoch durch Umgebungssensoren des Kraftfahrzeugs nicht immer vollständig erfasst werden, während bei der Bestimmung der eigenen Position meist mehrere Verfahren fusioniert werden, beispielsweise die Berücksichtigung von Odometrie gemeinsam mit einem globalen Navigationssatellitensystem (GNSS). Fällt eine dieser Ermittlungsarten weg oder ist sie von Natur aus ungenau, kann es schnell zu Ungenauigkeiten der Positionsdaten des eigenen Kraftfahrzeugs kommen.

Derartiges ist besonders relevant, wenn ein Fahrzeugsystem verwendet wird, das zum vollständig automatischen (hochautomatisierten bzw. pilotierten) Betrieb des Kraftfahrzeugs ausgebildet ist. Während nämlich aktuell der Fahrer des Kraftfahrzeugs selbst sicherstellen muss, dass sein Kraftfahrzeug mit keinem Objekt kollidiert beziehungsweise den korrekten Weg zurücklegt, mithin im Schadensfall der Fahrer für einen Unfall verantwortlich ist, muss eine hochexakte Absicherung bei derartigen zum vollautomatischen Betrieb eines Kraftfahrzeugs ausgebildeten Fahrzeugsystemen "hochautomatisierte Fahrzeugsysteme") erfolgen. Dabei ist für selbstfahrende, mithin vollautomatisch betriebene (pilotierte) Kraftfahrzeuge zum einen eine möglichst aktuelle Position des eigenen Kraftfahrzeugs notwendig, wobei die diese beschreibenden Positionsdaten, wenn sie durch die Fahrzeugsensorik ermittelt werden, Ungenauigkeiten aufgrund von Sensordrift, Rauschen, nicht eindeutigen Messungen und dergleichen aufweisen können. Doch auch die Position von anderen Objekten, insbesondere beweglichen Objekten, stellt eine wichtige Eingangsgröße zum unfallfreien vollautomatischen Betrieb eines Kraftfahrzeugs dar. Hier existieren, wie bereits erwähnt, die Schwierigkeiten, dass nicht immer alle relevanten Objekte in der Umgebung des Kraftfahrzeugs durch die Sensorik auch (hinreichend genau) erfasst werden können, insbesondere, wenn sie sich außerhalb des Erfassungsbereichs der Umgebungssensoren befinden.

Die DE 10 2004 035 856 A1 beschreibt eine elektrische Zusatzeinrichtung zur Anbringung an einem Halterohr einer Verkehrseinrichtung, wie beispielsweise einem Verkehrsschild, einer Verkehrsampel, eines Verkehrsleitpfostens sowie einer Bake, welche elektrische Zusatzeinrichtung elektronische Mittel mit einer Sensoreinrichtung zur Erfassung von Straßenverkehrsdaten und/oder einen Datensender zum Senden von Straßenverkehrsdaten aufweist. Eine solche Verkehrseinrichtung mit einer elektrischen Zusatzeinrichtung kann Teil eines Antikollisionssystems sein, bei welchem Verkehrsinformationen und Straßenverkehrsdaten von einer Fahrzeugsteuereinheit weiterverarbeitet werden, welche auf ein Bremssystem des Kraftfahrzeugs einwirken und/oder eine Sicherheitseinrichtung des Kraftfahrzeugs auslösen kann.

Aus der DE 11 2010 005 395 T5 ist eine Straße-Fahrzeugkooperations-Fahrsicherheits-Unterstützungsvorrichtung bekannt, wobei wenn festgestellt wird, dass es notwendig ist, die Aufmerksamkeit eines Fahrers eines Fahrzeugs zu wecken, eine Bildschirminformation, umfassend einen Zieldetektionsbereich im Fahrzeug angezeigt wird. Dabei werden Informationen zur Geschwindigkeit und Position von Hindernissen in einem mittels einem an einer Straßenseite installierten Bildsensor erfassten Bild berechnet, an eine Straßenseitenvorrichtung gesendet und zur Ausgabe einer Bildschirminformation durch eine Infrarotbake an ein Fahrzeug weitergeleitet.

Die DE 10 2007 032 814 A1 offenbart ein System zur Bereitstellung von Informationen zur Fahrunterstützung in einem Fahrzeug. Dazu steuert eine fahrzeugseitige Fahrunterstützungseinheit eine Anzeigeeinrichtung zur Ausgabe der Informationen an und kommuniziert mit einer in einer Unterstützungszone installierten straßenseitigen Einrichtung. Diese Einrichtung empfängt Bilddaten einer Kamera, welche die Unterstützungszone erfasst und leitet sie drahtlos an das Fahrzeug weiter.

US 2010/0100325 A1 offenbart ein Datenübertragungssystem zur Übertragung von Daten zwischen einem Objekterfassungssystem und einer Kollisionsverarbeitungseinrichtung. Das Objekterfassungssystem umfasst eine Vielzahl von Kameras zur Erfassung von Bewegungen von Objekten innerhalb eines Erfassungsbereichs. Die Sensorinformationen der Kameras werden von einer Pfadvorhersageeinheit zur Vorhersage eines Pfads des erfassten Objekts innerhalb des Erfassungsbereichs verarbeitet. Die verarbeiteten Informationen werden dann über das Datenübertragungssystem vom Objekterfassungssystem an die Kollisionsverarbeitungseinheit übermittelt, wobei jeweils ein Datensatz mit statischen Informationen bezüglich des Erfassungsbereichs und mit dynamischen Informationen bezüglich der Bewegung der erfassten Objekte im Erfassungsbereich übertragen wird. Die Pfadvorhersageeinheit kann durch Kartierung der Geschwindigkeit und der Position eines erfassten Objekts einen Vektor für diese Objekte erzeugen.

US 2010/0100324 A1 betrifft ein System zur Vorhersage einer Fahrzeugkollision, umfassend ein Systemfahrzeug mit Bordausstattung und eine Straßeninfrastruktur mit einer Straßenausstattung. Diese erfasst Informationen wie die Geschwindigkeit und den Ort von mittels einer Kamera detektierten Objekten. Deren Geschwindigkeit und eine Richtung werden Bildern der Kamera zugeordnet und zur Voraussage des Pfads der erfassten Objekte verarbeitet oder an eine Pfadvorhersageeinheit übertragen, die sich im Systemfahrzeug befinden kann. Das System kann ferner ein drahtloses Kommunikationssystem zur Übertragung von Informationen zwischen der straßenseitigen Infrastruktur und dem Systemfahrzeug umfassen.

Der Erfindung liegt daher die Aufgabe zu Grunde, eine Möglichkeit zur Verbesserung der Datenbasis bei der Positionsbestimmung in Kraftfahrzeugen durch Hinzufügen einer weiteren Quelle für Positionsdaten anzugeben.

Zur Lösung dieser Aufgabe ist erfindungsgemäß ein Verfahren mit den Merkmalen des Patentanspruchs 1 vorgesehen.

Ist dabei von einer Umgebung des Kraftfahrzeugs die Rede, so kann es sich insbesondere um einen vordefinierten Relevanzbereich handeln, beispielsweise insbesondere befahrbare Bereiche in einem bestimmten Radius um das Kraftfahrzeug und dergleichen.

Die Erfindung schlägt mithin vor, die Datenbasis durch die Nutzung von externen Quellen, konkret Überwachungskameras, zu erweitern. Überwachungskameras sind in vielen Bereichen des täglichen Lebens und somit auch des Verkehrs bereits bekannt und werden üblicherweise eingesetzt, um bestimmte Gebiete/Bereiche zu überwachen, insbesondere hinsichtlich der Sicherheit. Diese Überwachungskameras werden im Rahmen der vorliegenden Erfindung nun auch genutzt, um ein Kraftfahrzeug und/oder weitere Objekte nachzuverfolgen (zu "tracken"). Mithin kann in dem Fall, dass sich die Positionsdaten auf die Position des eigenen Kraftfahrzeuges als Objekt beziehen, eine externe, zusätzliche, redundante Positionsangabe zur Verfügung gestellt werden, die zur Überprüfung oder zur Erhöhung der Gesamtqualität einer Positionsbestimmung des Kraftfahrzeugs eingesetzt werden können. Beziehen sich die Positionsdaten auf nicht dem Kraftfahrzeug entsprechende Objekte, beispielsweise weitere Verkehrsteilnehmer, ist diese Redundanz auch gegeben, wenn die Objekte auch mit Umgebungssensoren des Kraftfahrzeugs erfasst werden können. Insbesondere erschließt sich jedoch die Möglichkeit, seitens des Kraftfahrzeugs auch Informationen zu Objekten zu erhalten, die außerhalb des Erfassungsbereichs der Umgebungssensoren des Kraftfahrzeugs selbst liegen. Dies ermöglicht eine frühzeitige Reaktion auf diese Objekte, insbesondere bei Verwendung eines zum vollautomatischen Betrieb des Kraftfahrzeugs ausgebildeten, hochautomatisierten Fahrzeugsystems. Selbstverständlich können auch warnende Fahrzeugsysteme die Positionsdaten nutzen, wenn beispielsweise vor einem noch nicht sichtbaren Fußgänger gewarnt werden soll oder dergleichen.

Wie bereits erwähnt, lässt sich das vorliegende Verfahren besonders vorteilhaft einsetzen, wenn als Fahrzeugsystem ein zum wenigstens teilweise, insbesondere vollständig, automatischen Betrieb des Kraftfahrzeugs ausgebildetes Fahrzeugsystem verwendet wird. Solche hochautomatisierten Fahrzeugsysteme sind besonders auf reichhaltige und exakte Informationen über das Kraftfahrzeug selbst und dessen Umgebung angewiesen, um möglichst optimale, sichere Fahrzeugtrajektorien vorausberechnen und verfolgen zu können. Hier liefern die Überwachungskameras, die das erfindungsgemäße Verfahren einsetzt, eine äußerst nützliche zusätzliche Datenquelle, die letztlich wie ein zusätzlicher externer Umgebungssensor und/oder zusätzlicher externer Positionssensor des Kraftfahrzeugs aufgefasst werden kann. Ein angezieltes Anwendungsgebiet für den pilotierten Betrieb von Kraftfahrzeugen sind Parkumgebungen, insbesondere Parkhäuser, wo Überwachungskameras zu Überwachungszwecken ohnehin häufig bereits verbaut sind. Zum anderen jedoch bieten solche Parkumgebungen oft Sichthindernisse durch andere Kraftfahrzeuge und/oder Mauern und/oder Bepflanzung oder dergleichen, so dass gegebenenfalls Objekte in der Umgebung des Kraftfahrzeugs außerhalb des Erfassungsbereichs der Umgebungssensoren des Kraftfahrzeugs liegen können, jedoch durch die Überwachungskamera erfasst werden können, so dass eine frühzeitige Adaption der geplanten Trajektorie zur Vermeidung einer Kollision möglich ist. Andere Fahrzeugsysteme, bei denen die Positionsdaten nützlich eingesetzt werden, sind Fahrerassistenzsysteme zur Warnung des Fahrers, die die relative Position und ggf. Geschwindigkeit anderer Objekte zur Ermittlung einer Warninformation auswerten.

Wie bereits erwähnt wurde, sieht eine vorteilhafte Ausgestaltung des erfindungsgemäßen Verfahrens vor, dass Positionsdaten des Kraftfahrzeugs selbst ermittelt und an dieses übertragen werden. Die Positionsdaten beschreiben daher (wenigstens) die eigene Position des Kraftfahrzeugs, welche dann redundant vorliegen sollte, nachdem auch andere Quellen zur Bestimmung der eigenen Position, also für weitere Positionsdaten, innerhalb des Kraftfahrzeugs vorliegen. Um Positionsdaten als eigene Positionsdaten an ein bestimmtes Kraftfahrzeug zu übertragen, müssen aus den Bilddaten der Überwachungskamera ermittelte Positionsdaten eines Objekts jedoch auch dem richtigen Kraftfahrzeug zugeordnet werden können.

In diesem Kontext sieht eine Weiterbildung des Verfahrens vor, dass das Kraftfahrzeug anhand eines zurückgelegten Weges und/oder einer weiteren vorliegenden, insbesondere von dem Kraftfahrzeug übersandten Positionsinformation und/oder anhand wenigstens einen äußeren Merkmals des Kraftfahrzeugs, insbesondere eines Nummernschildes und/oder eines Typkennzeichens, in den Bilddaten wenigstens einer der wenigstens einen Überwachungskamera kraftfahrzeugextern identifiziert wird. Wird das Kraftfahrzeug hochautomatisiert betrieben, worauf bereits näher eingegangen wurde, ist es üblich, die geplante Trajektorie und/oder eine aktuelle Position einer dem aktuell befahrenen Gebiet zugeordneten Steuereinrichtung zugänglich zu machen, mit der ohnehin eine Kommunikationsverbindung, beispielsweise über WLAN, besteht. Sind nun Positionen/gefahrene Wege aus den Bilddaten und auch aus Kommunikationsdaten von Kraftfahrzeugen bekannt, können diese verglichen werden, so dass ein Kraftfahrzeug eindeutig ermittelt und somit identifiziert ist. Mithin erfolgt auf diese Weise eine Zuordnung von in den Bilddaten detektierten Objekten zu Kommunikationspartnern, die selbstverständlich auch dann, wenn sich die Positionsdaten nicht auf das eigene Kraftfahrzeug beziehen, nützlich einsetzbar ist. Zweckmäßigerweise werden einmal detektierte und identifizierte Objekte, insbesondere Kraftfahrzeuge, kontinuierlich weiterverfolgt, so lange sie sich im Erfassungsbereich wenigstens einer Überwachungskamera befinden, worauf im Folgenden noch näher eingegangen werden wird. Andere Möglichkeiten zur Identifikation von Kraftfahrzeugen betreffen beispielsweise aus den Bilddaten selbst erhältliche Informationen, beispielsweise das Kennzeichen, welches aus einem Nummernschild ausgelesen werden kann und dergleichen.

Dabei sei an dieser Stelle noch darauf hingewiesen, dass die Zuordnung von in den Bilddaten detektierten Objekten zu Kommunikationspartnern nicht zwangsläufig erfolgen muss, nachdem es durchaus möglich ist, alle aus den Bilddaten detektierten Objekte oder gar die Bilddaten selbst an das Kraftfahrzeug zu übermitteln, wo dann die weitere Auswertung/Sortierung erfolgen kann.

Ein weiteres Ausführungsbeispiel in diesem Kontext sieht vor, dass die Positionsdaten des Kraftfahrzeugs selbst als redundante Information zu weiteren, durch das Kraftfahrzeug ermittelten Positionsdaten des Kraftfahrzeugs selbst verwendet werden, insbesondere zur Ermittlung einer endgültigen Positionsinformation aus den Positionsdaten und den weiteren Positionsdaten und/oder zur Überprüfung weiterer Positionsdaten und/oder einer aus diesen abgeleiteten Positionsinformation. Die mit Hilfe der Bilddaten der Überwachungskameras ermittelten Positionsdaten können mithin unmittelbar in die Ermittlung einer endgültigen, eine zu verwendende Position beschreibenden Positionsinformation eingehen, oder aber auch als Plausibilitätskriterium eingesetzt werden, um die Glaubwürdigkeit weiterer Positionsdaten und/oder der Positionsinformation zu beurteilen. In diesem Zusammenhang wird oft von der Positionswahrscheinlichkeit oder dem Vertrauensbereich der Position gesprochen.

Alternativ oder bevorzugt zusätzlich zur Position des Kraftfahrzeugs selbst können die Positionsdaten wenigstens eines nicht dem Kraftfahrzeug entsprechenden Objekts als Positionsdaten an das Kraftfahrzeug übermittelt werden, welche auf verschiedene Art und Weise beim Betrieb des Fahrzeugsystems eingesetzt werden können. So kann vorgesehen sein, dass Positionsdaten wenigstens eines nicht dem Kraftfahrzeug entsprechenden Objekts bei der Erstellung eines Umfeldmodells der Umgebung des Kraftfahrzeugs berücksichtigt werden. Solche Umfeldmodelle, die beispielsweise alle Objekte in einer definierten Umgebung des Kraftfahrzeugs und/oder den Belegungszustand von Unterbereichen der definierten Umgebung beschreiben können, wurden im Stand der Technik bereits vorgeschlagen. Üblicherweise werden solche Umfeldmodelle aus dem Kraftfahrzeug selbst ermittelten Daten zusammengestellt, wobei jedoch die extern durch Überwachungskameras ermittelten Positionsdaten eine hervorragende Erweiterung der Datenbasis auch in diesem Kontext bieten. Positionsdaten wenigstens eines nicht dem Kraftfahrzeug entsprechenden Objekts können ferner bei der Ermittlung einer Kollisionswahrscheinlichkeit mit dem Objekt und/oder bei der Ermittlung wenigstens einer zukünftigen Trajektorie des Kraftfahrzeugs berücksichtigt werden. Dies ist insbesondere im Hinblick auf einen hochautomatisierten, pilotierten Betrieb des Kraftfahrzeugs zweckmäßig. Entsprechende Funktionen von Fahrzeugsystemen sind im Stand der Technik weithin bekannt und brauchen hier nicht näher dargelegt werden.

Es kann vorgesehen sein, dass die insbesondere bereits wenigstens teilweise ausgewerteten Bilddaten zur insbesondere weiteren Auswertung und/oder die Positionsdaten an das Kraftfahrzeug übertragen werden, wie bereits angedeutet wurde. Diese Übertragung kann insbesondere durch eine einem befahrenen Gebiet, beispielsweise einer Parkumgebung, zugeordnete Steuereinrichtung erfolgen, die mit der wenigstens einen Überwachungskamera verbunden ist. Mit einer derartigen Steuereinrichtung, die entsprechend eine geeignete Kommunikationseinrichtung aufweist, kommunizieren Kraftfahrzeuge meist innerhalb des Gebiets ohnehin, beispielsweise über eine WLAN-Verbindung oder eine sonstige Kommunikationsverbindung. Mithin bietet es sich an, die Daten seitens der Steuereinrichtung zu sammeln und dort über die ohnehin bestehende Kommunikationsverbindung an das Kraftfahrzeug zu übertragen, wobei bevorzugt die Positionsdaten bereits seitens der Überwachungskameras selbst, einer insbesondere den Überwachungskameras zugeordneten Bildverarbeitungseinrichtung und/oder der Steuereinrichtung durch Auswertung der Bilddaten ermittelt werden.

Eine vorteilhafte Weiterbildung der Erfindung sieht vor, dass zu durch die wenigstens eine Überwachungskamera detektierten Objekten auch wenigstens eine den Positionsdaten des Objekts zugehörige Objektinformation ermittelt und insbesondere wenigstens teilweise an das Kraftfahrzeug übertragen wird. Es ist also möglich, aus den Bilddaten auch weitere Eigenschaften des wenigstens einen erfassten Objekts abzuleiten, die nützlich durch eine mit der Kamera verbundene Einrichtung und/oder das Kraftfahrzeug verwendet werden können. Dabei kann insbesondere vorgesehen sein, dass als Objektinformation eine Objektklasse und/oder eine Identifizierungsinformation und/oder eine Geschwindigkeit und/oder eine Bewegungshistorie und/oder eine Bewegungsvoraussage ermittelt wird. Diese Objektinformationen können nicht nur genutzt werden, um beispielsweise ein erkanntes Objekt einem Kommunikationspartner einer beziehungsweise der Steuereinrichtung zuzuordnen, sondern auch, um, worauf im Folgenden noch näher eingegangen werden wird, eine Vorfilterung dahingehend vorzunehmen, welche Bilddaten beziehungsweise Positionsdaten welchem Kraftfahrzeug zu übermitteln sind und dergleichen. Ferner ist es selbstverständlich denkbar, Funktionen der beziehungsweise einer Steuereinrichtung, die dem befahrenen Gebiet, beispielsweise einer Parkumgebung, zugeordnet ist, einzusetzen und zu verwerten.

Es ist erfindungsgemäß vorgesehen, dass für jede Überwachungskamera und/oder durch Zusammenfassung von auf gleiche Objekte bezogenen Positionsdaten für alle Überwachungskameras Positionslisten erstellt werden, die die Positionsdaten für durch wenigstens eine Überwachungskamera nachverfolgte bewegte Objekte enthält. Auch eine Objektinformation, wie beschrieben wurde, kann in solchen Positionslisten enthalten sein. Auf diese Weise wird eine besonders geeignete Repräsentation der Auswertungsergebnisse der Bilddaten ermöglicht. Es existieren verschiedene Möglichkeiten, um gleiche Objekte, die von verschiedenen Überwachungskameras erfasst wurden, einander zuzuordnen, welche bevorzugt auch kumulativ eingesetzt werden können. So sieht eine Möglichkeit zum Auffinden gleicher Objekte, die durch verschiedene Überwachungskameras detektiert wurden, vor, einen Positionsabgleich vorzunehmen, wobei zweckmäßigerweise bei der Bestimmung von Objektinformationen auch diesbezüglich ein Abgleich erfolgen kann. So können redundante Objekte in den Positionslisten vermieden werden. Selbstverständlich ist es auch denkbar, dann, wenn Positionsdaten zu einem bestimmten Objekt von mehreren Überwachungskameras vorliegen, diese durch statistische Auswertung beide in die Positionsdaten für das Objekt, die schließlich in der Positionsliste vorgehalten werden, eingehen zu lassen. Beispielsweise kann ein Mittelwert, insbesondere auch ein bevorzugt mit Fehlerwerten gewichteter Mittelwert, bestimmt werden oder dergleichen. Allgemein gesagt kann also eine Fusionierung erfolgen, also ein Zusammenführen von Positionsdaten verschiedener Quellen für ein einziges Objekt.

Solche Positionslisten werden mit besonderem Vorteil seitens der Überwachungskameras selbst, diesen zugeordneten Bildverarbeitungseinrichtungen und/oder einer dem befahrenen Gebiet zugeordneten Steuereinrichtung, die mit den Überwachungskameras verbunden ist, ermittelt. Dann ist eine Vorfilterung der an ein Kraftfahrzeug zu übertragenden Positionsdaten möglich, insbesondere also eine Reduzierung der Positionsliste.

So ist ferner erfindungsgemäß vorgesehen, dass bei einer Übertragung von Positionsdaten nicht dem Kraftfahrzeug entsprechender Objekte als Positionsliste an das Kraftfahrzeug eine für das Kraftfahrzeug unter Verwendung wenigstens eines Relevanzkriteriums gefilterte Positionsliste übermittelt wird. Es wird mithin überprüft, ob die Objekte für das Kraftfahrzeug überhaupt relevant sind, wobei nur bei gegebener Relevanz diese in der Positionsliste für das Kraftfahrzeug verbleiben und mithin als Positionsdaten an das Kraftfahrzeug übertragen werden.

Konkret ist dabei vorgesehen, dass ein einem, insbesondere an die filternde Einrichtung von dem Kraftfahrzeug übermittelten und/oder vorausberechneten, zukünftigen Fahrschlauch des Kraftfahrzeugs berücksichtigendes Relevanzkriterium verwendet wird. Eine derartige Ausgestaltung ist insbesondere dann wiederum nützlich, wenn das Kraftfahrzeug vollständig automatisch betrieben wird, da dann die zukünftige Trajektorie ohnehin zyklisch geplant und vorausberechnet wird. Die zukünftige Trajektorie definiert jedoch auch einen zukünftigen Fahrschlauch, der beispielsweise einer für das befahrene Gebiet verwendeten, mit den Überwachungskameras verbundenen Steuereinrichtung übermittelt werden kann, die auch als Kommunikationspartner dient. Der Steuereinrichtung ist dann bekannt, welchen Weg das Kraftfahrzeug nehmen wird, so dass sie Objekte entlang dieses Weges als relevant klassifizieren und deren Positionsdaten (und gegebenenfalls Objektinformationen) an das Kraftfahrzeug übermitteln kann. Die vorliegende Erfindung sieht in diesem Kontext vor, dass Positionsdaten eines Objekts an das Kraftfahrzeug übermittelt werden, wenn sich das Objekt in dem gegebenenfalls um einen Sicherheitsbereich erweiterten Fahrschlauch befindet und/oder zu einem dem Passieren des Kraftfahrzeugs entsprechenden Zeitpunkt mit einer eine Wahrscheinlichkeitsschwelle überschreitenden Wahrscheinlichkeit innerhalb des Fahrschlauchs befinden wird. Die zweite der genannten Möglichkeiten ist insbesondere dann sinnvoll einsetzbar, wenn auch eine Vorausberechnung der Bewegung der Objekte erfolgt, welche dann als Objektinformation eingesetzt werden kann. Letztlich werden also die durch die Überwachungskameras erkannten Objekte mit dem Weg der selbstfahrenden Kraftfahrzeuge verglichen, wobei immer dann, wenn sich Objekte im Weg eines Kraftfahrzeugs befinden, ihre Positionsdaten an das Kraftfahrzeug übermittelt werden, so dass nur relevante Informationen weitergegeben werden und Kollisionen vermieden werden können.

Als Teil der Positionsdaten, insbesondere bei einem Kraftfahrzeug als Objekt, kann auch eine Orientierung des Objekts ermittelt werden. Hierzu kann vorgesehen sein, dass als Teil der Positionsdaten eine Orientierung des Objekts, auf das sie sich beziehen, durch Auswertung äußerer Merkmale des Objekts ermittelt wird. Dabei ist es denkbar, zur Ermittlung einer groben Orientierung die Gesamtform von Kraftfahrzeugen und dergleichen zu erfassen, wobei genauere Orientierungsangaben bezüglich bestimmter, leicht detektierbarer Merkmale ebenso ermittelt werden können. Konkret kann vorgesehen sein, dass zur Ermittlung einer Orientierung eines Kraftfahrzeugs als äußere Merkmale ein Nummernschild des Kraftfahrzeugs und/oder die Außenspiegel des Kraftfahrzeugs in den Bilddaten detektiert und analysiert werden. Beide Objekte sind in Bilddaten leicht detektierbar, wobei beispielsweise sogenannte "Shape Matching-Algorithmen" eingesetzt werden können. Ein Nummernschild eines Kraftfahrzeuges bildet beispielsweise meist ein helles Rechteck, welches leicht zu detektieren ist. Seine Ausrichtung steht in unmittelbarer Korrelation zur Orientierung des Kraftfahrzeugs, die entsprechend daraus schlussgefolgert werden kann. Ähnliche Bildverarbeitungsalgorithmen können auch bei Außenspiegeln des Kraftfahrzeugs eingesetzt werden. Es sei noch darauf hingewiesen, dass solche äußeren Merkmale von Objekten selbstverständlich auch zur Ermittlung von Objektinformationen eingesetzt werden können, nachdem sie ohnehin detektiert werden.

Vorteilhafterweise werden als Positionsdaten absolute Positionen in einem geodätischen und/oder auf ein befahrenes Gebiet bezogenen Koordinatensystem ermittelt. Die extrinsische sowie intrinsische Position von Überwachungskameras kann durch Kalibrierung bestimmt werden. Somit ist eine Übertragung der Position von erkannten Objekten aus dem Kamerakoordinatensystem in ein globales Koordinatensystem, beispielsweise ein Koordinatensystem des befahrenen Gebiets, möglich. Hierzu werden die extrinsischen Kalibrierwerte eingesetzt. Zweckmäßigerweise beziehen sich die in den Positionsdaten erhaltenen Positionen somit auf ein Koordinatensystem, das auch das Kraftfahrzeug selbst kennt, so dass eine unmittelbare Weiterverarbeitung der Positionsdaten erfolgen kann. In diesem Kontext sei darauf hingewiesen, dass häufig bei Parkumgebungen, insbesondere Parkhäusern, Kartendaten an das Kraftfahrzeug übermittelt werden, die sich auf ein bestimmtes Koordinatensystem beziehen können, welches das Kraftfahrzeug nutzen kann, um innerhalb der Parkumgebung zu navigieren, sei es automatisch oder durch einen mittels der Kartendaten unterstützten Fahrer. Dann ist es zweckmäßig, auch die Positionsdaten als Positionen in diesem Koordinatensystem angebend auszugestalten.

Eine besonders vorteilhafte Ausgestaltung der vorliegenden Erfindung sieht vor, dass in einem Schritt der Bildverarbeitung, also der Auswertung, auf einen nicht bewegten, statischen, insbesondere angelernten Hintergrund bezogene Bilddaten der weiteren Betrachtung entzogen werden. Es wurden inzwischen Verfahren bekannt, die es ermöglichen, beispielsweise mit dem ersten Einsatz oder einem Neustart der Überwachungskameras, einen statischen Hintergrund derart einzulernen, dass dieser aus später aufgenommenen Bilddaten der Überwachungskameras wieder entfernt werden kann, so dass die verbleibenden Bilddaten lediglich bewegte, zusätzlich zu dem Hintergrund vorhandene Objekte enthalten. Dies vereinfacht die weitere Auswertung der Bilddaten enorm, nachdem diese nur noch die bewegten oder neu hinzugekommenen Objekte enthalten, deren Positionsdaten aus den Bilddaten bestimmt werden sollen.

Ein derartiges Vorgehen ist beispielsweise aus einem Artikel von J. Jacques, C. Jung und S. Musse, "Background Subtraction and Shadow Detection in Grayscale Video Sequences", SIBGRAPI. IEEE Computer Society, 2005, Seiten 189-196, bekannt. Dort wird vorgeschlagen, die Differenz aus einem aktuellen Kamerabild und dem Hintergrund durch Schwellwerte in eine binäre Repräsentation zu überführen, wobei diese Binärbilder durch morphologische Bildoperationen verbessert werden können. Insbesondere werden dort auch Schatteneffekte (durch inhomogene Beleuchtung) aufgefunden und möglichst weitgehend entfernt. Derartige Vorgehensweisen können auch im Rahmen der vorliegenden Erfindung eingesetzt werden.

Zweckmäßigerweise können in den insbesondere vom Hintergrund bereinigten Bilddaten Objekte durch Clusterbildung detektiert werden. Es werden mithin Nachbarschaftsbeziehungen einzelner Pixel betrachtet, um so Cluster bilden zu können, die zu einem gemeinsamen Objekt gehören können. Beispielsweise kann vorgesehen sein, dass Cluster als ein Objekt angesehen werden, sobald sie eine Schwellwertgröße erreichen.

In vorteilhafter Weiterbildung der Erfindung kann eine Nachverfolgung eines erkannten Objekts in zu verschiedenen Zeiten aufgenommenen Bilddaten unter Verwendung eines Kalman-Filters erfolgen. Dabei wird bevorzugt ein erweiterter Kalman-Filter verwendet, da dieser bei nicht linearen Bewegungsverläufen besser geeignet ist, die Position des Objekts in den aktuellen Bilddaten zu prädizieren und somit die Nachverfolgung zu ermöglichen. Eine Nachverfolgung ist insbesondere dann zweckmäßig, wenn der Weg der erkannten Objekte mit den (übermittelten) Trajektorien hochautomatisierter Kraftfahrzeuge verglichen werden soll.

Es sei an dieser Stelle noch angemerkt, dass die Überwachungskameras bevorzugt zeitlich synchronisiert sind, um Zeitfehler möglichst zu vermeiden.

Wie bereits erwähnt, erfolgt die Auswertung, insbesondere die Ermittlung von Positionslisten, zweckmäßigerweise wenigstens teilweise seitens der Überwachungskamera und/oder einer beziehungsweise der mit der Überwachungskamera verbundenen, insbesondere einem befahrenen Gebiet zugeordneten Steuereinrichtung. Es können Bildverarbeitungseinrichtungen eingesetzt werden, die alleinstehend realisiert sind, beispielsweise falls es nicht möglich ist, die Bildverarbeitungseinrichtungen in die Überwachungskamera und/oder die Steuereinrichtung zu integrieren. An die Kraftfahrzeuge werden als Positionsdaten dann solche gesendet, die unmittelbar in dem Kraftfahrzeug weiterverarbeitet werden können; insbesondere als für das Kraftfahrzeug gefilterte Positionslisten.

Besonders vorteilhaft lässt sich das erfindungsgemäße Verfahren in einer mehrere Parkplätze aufweisende Parkumgebung, insbesondere einem Parkhaus, ausführen, dem die Überwachungskameras zugeordnet sind. Wie bereits erwähnt, weisen eine Vielzahl heutiger Parkhäuser bereits ohnehin Überwachungskameras auf, die dann einem weiteren Nutzen zugeführt werden können. Mithin ist es auch für andere befahrene Gebiete zweckmäßig, wenn die Überwachungskameras wenigstens einer weiteren Funktion, insbesondere einer Sicherheitsfunktion, dienen.

Neben dem Verfahren betrifft die Erfindung auch ein Positionsdatenermittlungs- und -verteilungssystem mit den Merkmalen des Patentanspruchs 22. Sämtliche Ausführungen bezüglich des erfindungsgemäßen Verfahrens lassen sich analog auf das erfindungsgemäße System übertragen, mit welchem ebenso die genanten Vorteile erhalten werden können. Besonders bevorzugt kann ein solches Positionsdatenermittlungs- und -verteilungssystem in einer Parkumgebung, beispielsweise einem Parkhaus, eingesetzt werden, wobei die Kommunikationseinrichtung und die Auswerteeinrichtung besonders bevorzugt in eine der Parkumgebung zugeordnete Steuereinrichtung integriert sind. Selbstverständlich kann die Auswerteeinrichtung auch teilweise auf die einzelnen Überwachungskameras verteilt sein.

Weitere Vorteile und Einzelheiten der vorliegenden Erfindung ergeben sich aus den im Folgenden beschriebenen Ausführungsbeispielen sowie anhand der Zeichnung. Dabei zeigen:

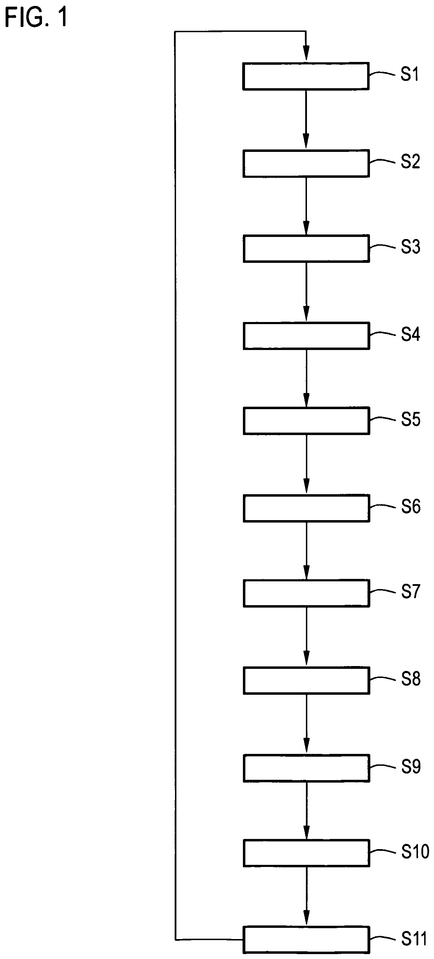

- Fig. 1: einen Ablaufplan des erfindungsgemäßen Verfahrens,
- Fig. 2: eine Situation in einem Parkhaus,
- Fig. 3: ein Kamerabild, aus dem ein statischer Hintergrund entfernt wurde, und
- Fig. 4: ein erfindungsgemäßes Positionsdatenermittlungs- und - verteilungssystem.

Ein Ausführungsbeispiel des erfindungsgemäßen Verfahrens soll nun im Hinblick auf eine Anwendung in einem Parkhaus als Parkumgebung dargestellt werden, wobei wenigstens ein Teil der Kraftfahrzeuge in dem Parkhaus vollautomatisch betrieben werden, das bedeutet, statt durch einen Fahrer werden sie durch ein zum vollautomatischen Betrieb des Kraftfahrzeugs ausgebildetes, hochautomatisiertes Fahrzeugsystem geführt. In dem Parkhaus ist eine Vielzahl von Überwachungskameras vorhanden, die einer Sicherheitsfunktion dienen und beispielsweise durch eine Person überwacht und/oder deren Bilddaten für eine spätere Überprüfung aufgezeichnet werden können. Vorliegend werden die Überwachungskameras jedoch auch genutzt, um Positionsdaten zu ermitteln, die beim Betrieb des hochautomatisierten Fahrzeugsystems eingesetzt werden können.

Die Überwachungskameras sind mit einer zentralen Steuereinrichtung für das Parkhaus als durch die Kraftfahrzeuge befahrenes Gebiet verbunden, wobei die Steuereinrichtung eine Kommunikationseinrichtung aufweist, über die eine Kommunikationsverbindung zu innerhalb des Parkhauses betriebenen Kraftfahrzeugen, beispielsweise über WLAN, hergestellt werden kann. Im Bereich des WLAN bietet sich der Standard 801.11 p an, der im automotiven Umfeld oft zur Kraftfahrzeug-zu-Infrastruktur-Kommunikation eingesetzt wird (car2x-Kommunikation). Über diese Kommunikationsverbindung kann zum einen die Steuereinrichtung Informationen zum Parkhaus bereitstellen, beispielsweise Kartendaten und Informationen zu freien Parkplätzen, es ist jedoch auch für das Kraftfahrzeug möglich, seinerseits für die Steuereinrichtung, vorliegend insbesondere das erfindungsgemäße Verfahren, nützliche Informationen an die Steuereinrichtung zu übertragen, beispielsweise Trajektorien der hochautomatisiert betriebenen Kraftfahrzeuge und eine aktuell angenommene Positionsinformation. Trajektoriendaten der Kraftfahrzeuge können seitens der Steuereinrichtung beispielsweise genutzt werden, um selbst eine Überprüfung von Kollisionsgefahren vorzunehmen, nachdem die Trajektorien idealerweise aller in dem Parkhaus betriebenen Kraftfahrzeuge zur Verfügung stehen. Insbesondere werden die Trajektoriendaten und die Positionsrückmeldung der Kraftfahrzeuge jedoch auch genutzt, um durch die Überwachungskamera detektierten Objekten Kommunikationspartner zuordnen zu können, was im Folgenden noch näher dargestellt werden wird. Hierzu kann ein Kraftfahrzeug im Übrigen auch Identifikationsdaten, beispielsweise ein Kennzeichen, übermitteln, welches mit ebenso aus den Bilddaten der Überwachungskameras ermittelbaren Objektinformationen verglichen werden kann, um detektierte Objekte Kommunikationspartnern zuzuordnen. Insbesondere bezüglich der Kennzeichen, aber auch bei anderen zur Identifikation dienenden Objektinformationen, kann vorgesehen sein, dass diese nur kurzfristig vorgehalten werden und, beispielsweise mit Verlassen des Parkhauses, wieder gelöscht werden.

Die Erfassungsbereiche der Überwachungskameras decken möglichst weitgehend das befahrbare Gebiet des Parkhauses ab, wobei sich die Erfassungsbereiche verschiedener Überwachungskameras durchaus überlappen können.

In einem Schritt S1 werden Bilddaten durch die Überwachungskameras aufgenommen. Aus diesen Bilddaten wird in einem Schritt S2 zunächst ein statischer, angelernter Hintergrund entfernt. Hierfür sind im Stand der Technik bereits Verfahren bekannt, wobei lediglich beispielhaft auf den bereits genannten Artikel von J. Jacques et al. verwiesen werden soll. Nach Durchführen des Schrittes S2 liegen also vom Hintergrund befreite Bilddaten vor.

In diesen vom Hintergrund befreiten Bilddaten werden in einem Schritt S3 Objekte durch Clusterung identifiziert. Auch hierfür sind im Stand der Technik bereits eine Vielzahl von Möglichkeiten bekannt, die auch im Rahmen der vorliegenden Erfindung Anwendung finden können. Immer dann, wenn ein Objekt detektiert wurde, wird dieses, gegebenenfalls auch über mehrere Kameras hinweg, nachverfolgt, wobei, wie im Stand der Technik bereits bekannt, bevorzugt ein Kalman-Filter eingesetzt wird, um aktuelle Positionen der Objekte zu prädizieren und mithin eine Zuordnung zu ermöglichen. Nachdem es häufig zu nicht linearen Bewegungen kommt, wird vorliegend ein erweiteter Kalman-Filter verwendet.

Die Position detektierter Objekte im Kamerakoordinatensystem der jeweiligen Überwachungskameras kann nach einer intrinsischen Kalibrierung der Kamera bestimmt werden. Dies geschieht vorliegend im Schritt S4.

Im Schritt S5 wird die intrinsische Kalibrierung der Überwachungskameras ferner genutzt, um die im Kamerakoordinatensystem bestimmte Position des Objekts in eine absolute Position des Objekts in einem geodätischen und/oder auf das Parkhaus bezogenen Koordinatensystem zu bestimmen, welches insbesondere auch die Kraftfahrzeuge nutzen, denen nach der Beendigung der hier beschriebenen Auswertung der Bilddaten Positionsdaten zur Verfügung gestellt werden sollen. In diesem Kontext ist es besonders zweckmäßig, wenn das Objekt in überlappenden Erfassungsbereichen mehrerer Kameras enthalten ist, da dann eine genauere dreidimensionale Position beispielsweise durch Rückprojektionsmethoden bestimmt werden kann. Die extrinsische Kalibrierung der Überwachungskameras, die deren relative Anordnung beschreibt, kann hierbei verwendet werden.

Es sei an dieser Stelle angemerkt, dass in den Schritten S4 und S5 die Positionen auch als eine Orientierung umfassend bestimmt werden können, insbesondere für Objekte bestimmter Klasse, bevorzugt Kraftfahrzeuge. Dazu können äußere Merkmale der Kraftfahrzeuge, beispielsweise deren Nummernschild und deren Außenspiegel, in den Bilddaten detektiert und analysiert werden, um hieraus eine Orientierung schlusszufolgern.

Im Schritt S6 werden weitere Objektinformationen zu den detektierten Objekten bestimmt, vorliegend zunächst wenigstens eine Objektklasse. Objektklassen geben an, um welche Art von Objekt es sich handelt. Typische, zu verwendende Objektklassen können Fußgänger, Kinderwagen, Kraftfahrzeug, Zweirad und dergleichen sein. Objektklassen können über Algorithmen erkannt werden, die beispielsweise die Form und/oder weiteren Merkmale der Objekte, wie sie in den Bilddaten sichtbar sind, auswerten und mit Vergleichsdaten vergleichen. Über mehrere Zeitpunkte, zu denen Bilddaten aufgenommen werden, hinweg, werden als Objektinformationen hier auch Bewegungshistorien für die einzelnen Objekte aufgezeichnet, die ja, wie oben beschrieben, nachverfolgt werden. Eine weitere zweckmäßige Information, die dann insbesondere auch an die Kraftfahrzeuge übermittelt werden kann, ist die Geschwindigkeit eines Objektes, die ebenfalls aus Bilddaten aufeinanderfolgender Zeitpunkte ermittelt werden kann. Selbstverständlich sind auch eine Vielzahl weiterer Objektinformationen grundsätzlich denkbar und ermittelbar.

Insgesamt entsteht so für jede Überwachungskamera, beispielsweise unter Verwendung einer Bildverarbeitungseinheit, die in die Überwachungskamera integriert oder dieser zugeordnet sein kann, eine Positionsliste, die die von der Überwachungskamera erfassten Objekte, die zugehörigen Positionsdaten und die zugehörigen Objektinformationen enthält. Diese Liste wird im Schritt S7 gebildet und im vorliegenden Ausführungsbeispiel an die zentrale Steuereinrichtung weitergeleitet. Die Steuereinrichtung führt, weiterhin im Schritt S7, die verschiedenen Positionslisten der einzelnen Überwachungskameras zu einer einzigen, endgültigen Positionsliste zusammen, indem mehrfach auftretende Objekte durch Vergleich der Positionsdaten und/oder der Objektinformationen identifiziert werden und die Positionsliste von mehrfach erfassten Objekten bereinigt wird, wofür die extrinsische Kalibrierung der Überwachungskameras nützlich berücksichtigt werden kann. Auch die Nachverfolgungsdaten, insbesondere also die Bewegungshistorie, erweist sich in diesem Kontext als nützlich. Von unterschiedlichen Überwachungskameras für das gleiche Objekt erfasste Positionsdaten oder Objektinformationen können auch durch statistische Auswertung zusammengefasst werden.

In einem Schritt S8 werden dann die der Objektklasse Kraftfahrzeug zugeordneten Objekte dahingehend überprüft, ob sie einem Kommunikationspartner der Steuereinrichtung zugeordnet sind. Hierzu werden Positionsdaten und Objektinformationen der als Kraftfahrzeug klassifizierten Objekte mit entsprechenden Kommunikationsdaten des Kraftfahrzeugs verglichen, die über die Trajektorie oder mitprotokollierte Positionsinformationen auch eine Bewegungshistorie enthalten können, wobei die Zuordnung von detektierten Objekten zu Kommunikationspartnern allerdings auch alternativ oder bevorzugt zusätzlich auf der Basis anderer Merkmale erfolgen kann, beispielsweise eines aus den Bilddaten extrahierten Kennzeichens, eines Kraftfahrzeugmodells oder dergleichen. Es wird jedoch darauf hingewiesen, dass auch vorgesehen sein kann, Positionsdaten an Kraftfahrzeuge zu übertragen, die nicht durch die Überwachungskameras erfasst wurden, beispielsweise weil sie sich in einem toten Bereich befinden, für die jedoch die nun folgenden Ausführungen entsprechend fortgelten, nur dass keine Positionsdaten des Kraftfahrzeugs selbst an das Kraftfahrzeug des Kommunikationspartners übertragen werden können.

Die nun folgenden Schritte S9 bis S11 werden für jeden Kommunikationspartner durchgeführt. Zunächst wird für jeden Kommunikationspartner überprüft, ob dieser als Objekt tatsächlich erfasst wurde, vgl. hierzu auch die Erläuterung zum Schritt S8. Ist dies der Fall, werden die Positionsdaten dieses Objekts als Positionsdaten des Kraftfahrzeugs selbst zu einer gefilterten, an das Kraftfahrzeug zu übertragenden Positionsliste hinzugefügt. Dies geschieht in einem Schritt S9.

In einem Schritt S10 wird für die anderen detektierten Objekte der bereinigten, endgültigen Positionsliste, die der Steuereinrichtung vorliegt, anhand eines Relevanzkriteriums überprüft, ob diese für das Kraftfahrzeug relevant sind. Vorliegend wird hierzu ein sich aus der geplanten Trajektorie des Kraftfahrzeugs ergebender zukünftiger Fahrschlauch mit einem zusätzlichen Sicherheitsbereich berücksichtigt. Objekte, die innerhalb dieses Fahrschlauchs befindlich sind und/oder aufgrund einer Vorausberechnung dann, wenn das Kraftfahrzeug die entsprechende Stelle passiert, innerhalb dieses Fahrschlauchs (plus Sicherheitsbereich) befindlich sein werden, sind als für das Kraftfahrzeug relevant anzusehen. Die entsprechenden Positionsdaten werden der gefilterten Objektliste für dieses Kraftfahrzeug hinzugefügt. Dies alles geschieht im Schritt S10.

Die für ein bestimmtes Kraftfahrzeug, also einen bestimmten Kommunikationspartner, gefilterte Positionsliste kann zudem um wenigstens einen Teil der Objektinformation der einzelnen Objekte ergänzt werden, wenn diese für die Verwendung im Kraftfahrzeug nützlich sind.

In einem Schritt S11 wird schließlich die gefilterte Positionsliste an den jeweiligen Kommunikationspartner übermittelt, wo sie beim Betrieb wenigstens eines Fahrzeugsystems verwendet wird.

Sodann wird für die nächsten aufgenommenen Bilddaten der Überwachungskameras wieder mit Schritt S1 fortgefahren.

Zur Nutzung der im Kraftfahrzeug empfangenen Positionsdaten und Objektinformationen existiert eine Vielzahl von Möglichkeiten. Die empfangene gefilterte Positionsliste kann dabei letztlich als eine Art virtueller, externer Sensor des Kraftfahrzeugs aufgefasst werden. Die Daten der gefilterten Positionsliste können beispielsweise zur Aktualisierung eines Umfeldmodells eines Kraftfahrzeugs berücksichtigt werden und/oder direkt in die Steuerung vom Fahrzeugsystemen, insbesondere des hochautomatisierten Fahrzeugsystems, eingehen. Die Positionsdaten des Kraftfahrzeugs selbst, so sie übertragen wurden, sind redundant zur weiteren Positionsdaten, die mit kraftfahrzeugeigenen Einrichtungen ermittelt wurden, so dass sie in die Ermittlung einer endgültigen zu verwendenden Positionsinformation des Kraftfahrzeugs selbst eingehen können oder aber auch zur Überprüfung weiterer Positionsdaten und der Positionsinformation dienen können. Bezüglich der Positionsdaten anderer Objekte als das Kraftfahrzeug selbst können verschiedene im Stand der Technik grundsätzlich bekannte Auswertungen durchgeführt werden, beispielsweise im Hinblick auf Anpassungen von Trajektorien zur Kollisionsvermeidung.

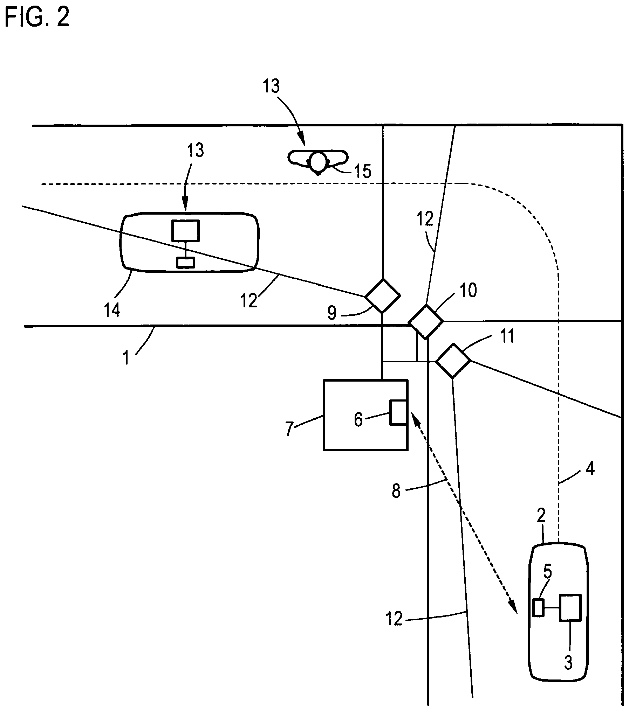

Zur weiteren Erläuterung zeigt Fig. 2 eine Situation in einem Streckenabschnitt 1 des Parkhauses. Ein Kraftfahrzeug 2, das über ein aktives, zum vollautomatischen Betrieb des Kraftfahrzeugs 2 ausgebildetes, also hochautomatisiertes Fahrzeugsystem 3 verfügt, bewegt sich auf einen Knick in dem Streckenabschnitt 1 zu, wobei die zukünftige Trajektorie 4 des Kraftfahrzeugs 2 ebenso gezeigt ist. Zwischen einer Kommunikationseinrichtung 5 des Kraftfahrzeugs 2 und einer Kommunikationseinrichtung 6 der zentralen Steuereinrichtung 7 besteht eine Kommunikationsverbindung 8. Wie bereits erläutert wurde, ist die Steuereinrichtung 7 mit den Überwachungskameras verbunden, von denen vorliegend beispielhaft drei Überwachungskameras 9, 10 und 11 nebst ihren Erfassungsbereichen 12 gezeigt sind.

Das Kraftfahrzeug 2 selbst liegt im Erfassungsbereich 12 der Überwachungskamera 11 und wird dort entsprechend als ein Objekt detektiert, so dass Positionsdaten des Kraftfahrzeugs 2 selbst ermittelt werden.

Hinter dem Knick des Streckenabschnitts 1 sind weitere Objekte 13 vorhanden, die durch Umgebungssensoren des Kraftfahrzeugs 2 aufgrund des Knicks nicht erfasst werden können. Dabei handelt es sich vorliegend um ein weiteres Kraftfahrzeug 14 und einen Fußgänger 15. Auch diese Objekte 13 werden in Positionslisten erfasst. Wie zu erkennen ist, befinden sich sowohl das Kraftfahrzeug 14 als auch der Fußgänger 15 im Bereich der geplanten Trajektorie 4 des Kraftfahrzeugs 2, die auch an die Steuereinrichtung 7 übermittelt wurde, so dass sie beide als relevant für das Kraftfahrzeug 2 zu klassifizieren sind, so dass ihre Positionsdaten, nachdem sie vom Erfassungsbereich 12 der Überwachungskamera 9 erfasst werden, über die Kommunikationsverbindung 8 an das Kraftfahrzeug 2 übertragen werden.

Trotzdem das Kraftfahrzeug 2 also die Objekte 13 nicht mit seinen eigenen Umgebungssensoren erfassen kann, erhält es diesbezüglich Informationen und kann beispielsweise seine geplante Trajektorie 4 anpassen.

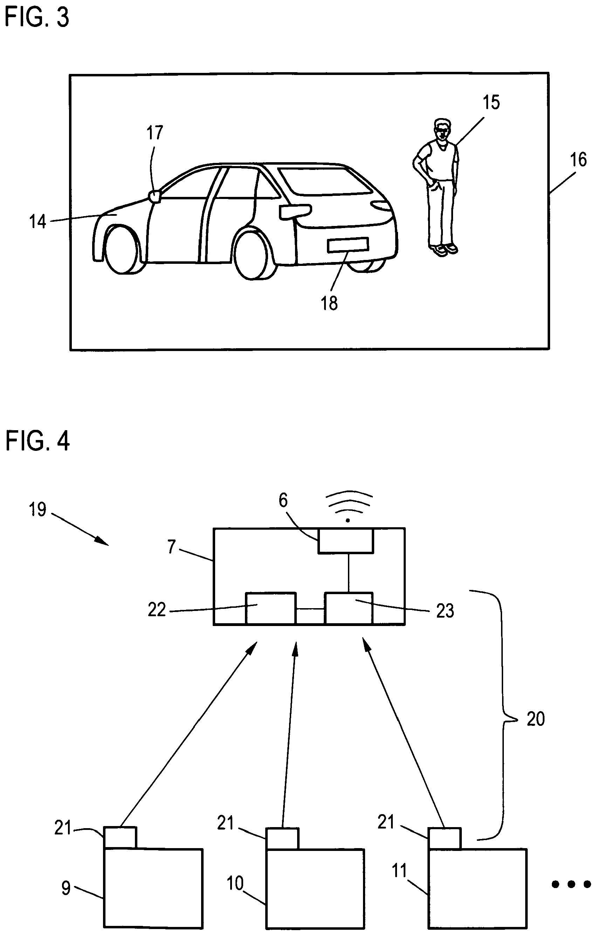

Fig. 3 zeigt schematisch ein bereits vom Hintergrund bereinigtes Kamerabild 16 der Überwachungskamera 9, auf dem sowohl das Kraftfahrzeug 14 als auch der Fußgänger 15 klar erkennbar sind, gemeinsam mit Merkmalen, die die Feststellung einer Objektklasse und weiterer Objektinformationen erlauben. Besonders hervorgehoben seien vorliegend der Außenspiegel 17 und das Nummernschild 18, aus denen eine Orientierung des Kraftfahrzeugs 14 abgeleitet werden kann; für das Nummernschild 18 kann gegebenenfalls auch ein Kennzeichen ausgelesen werden.

Fig. 4 zeigt schließlich in Form einer Prinzipskizze ein erfindungsgemäßes Positionsdatenbestimmungs- und -verteilungssystem 19, welches zunächst die Überwachungskameras 9, 10 und 11 (sowie die weiteren Überwachungskameras des Parkhauses) umfasst. Als Teil einer Auswerteeinrichtung 20 ist jeder Überwachungskamera 9, 10, 11 eine Bildverarbeitungseinheit 21 zugeordnet, die die überwachungskameraspezifischen Positionslisten stellt und an die Steuereinrichtung 7 weiterleitet, dort konkret eine Positionslistenkombinationseinheit 22, die die Positionslisten unter Bereinigung von doppelten Objekten zu einer gemeinsamen, endgültigen Positionsliste zusammenfasst. In einer Filtereinheit 23 werden die gefilterten Positionslisten für die Kommunikationspartner zusammengestellt, die dann über die Kommunikationseinrichtung 6 gezielt übertragen werden können.

Die Auswerteeinheit 22 umfasst also vorliegend die Bildverarbeitungseinheiten 21, die Positionslistenkombinationseinheit 22 und die Filtereinheit 23.

## Patentansprüche

1. Verfahren zur Ermittlung von Positionsdaten zur Nutzung beim Betrieb eines Fahrzeugsystems (3) eines Kraftfahrzeugs (2), wobei Bilddaten wenigstens einer wenigstens einen Teil einer Umgebung des Kraftfahrzeugs (2) und/oder das Kraftfahrzeug (2) erfassenden, extern zu dem Kraftfahrzeug (2) vorgesehenen Überwachungskamera (9, 10, 11) zur Ermittlung der Positionsdaten wenigstens eines erfassten Objekts (13) ausgewertet und diese wenigstens teilweise dem Fahrzeugsystem (3) zur Verfügung gestellt werden,
**dadurch gekennzeichnet,**
**dass** für jede Überwachungskamera (9, 10, 11) und/oder durch Zusammenfassung von auf gleiche Objekte (13) bezogenen Positionsdaten für alle Überwachungskameras (9, 10, 11) Positionslisten erstellt werden, die die Positionsdaten für durch wenigstens eine Überwachungskamera (9, 10, 11) nachverfolgte bewegte Objekte (13) enthalten, wobei bei einer Übertragung von Positionsdaten nicht dem Kraftfahrzeug (2) entsprechender Objekte (13) als Positionsliste an das Kraftfahrzeug (2) eine für das Kraftfahrzeug (2) unter Verwendung wenigstens eines Relevanzkriteriums gefilterte Positionsliste übermittelt wird, wobei ein einen zukünftigen Fahrschlauch des Kraftfahrzeugs (2) berücksichtigendes Relevanzkriterium derart verwendet wird, dass ein Objekt (13) als relevant angesehen wird, wenn es sich in dem gegebenenfalls um einen Sicherheitsbereich erweiterten Fahrschlauch befindet und/oder zu einem dem Passieren des Kraftfahrzeugs (2) entsprechenden Zeitpunkt mit einer eine Wahrscheinlichkeitsschwelle überschreitenden Wahrscheinlichkeit innerhalb des Fahrschlauchs befinden wird.

2. Verfahren nach Anspruch 1,
**dadurch gekennzeichnet,**
**dass** das Fahrzeugsystem (3) ein zum wenigstens teilweise, insbesondere vollständig automatischen Betrieb des Kraftfahrzeugs (2) ausgebildetes Fahrzeugsystem (3) ist.

3. Verfahren nach Anspruch 1 oder 2,
**dadurch gekennzeichnet,**
**dass** Positionsdaten des Kraftfahrzeugs (2) selbst ermittelt und an dieses übertragen werden.

4. Verfahren nach Anspruch 3,
**dadurch gekennzeichnet,**
**dass** das Kraftfahrzeug (2) anhand eines zurückgelegten Weges und/oder einer weiteren vorliegenden, insbesondere von dem Kraftfahrzeug (2) übersandten Positionsinformation und/oder anhand wenigstens eines äußeren Merkmals des Kraftfahrzeugs (2), insbesondere eines Nummernschildes (18) und/oder eines Typkennzeichens, in den Bilddaten wenigstens einer der wenigstens einen Überwachungskamera (9, 10, 11) kraftfahrzeugextern identifiziert wird.

5. Verfahren nach Anspruch 3 oder 4,
**dadurch gekennzeichnet,**
**dass** die Positionsdaten des Kraftfahrzeugs (2) selbst als redundante Information zu weiteren, durch das Kraftfahrzeug (2) ermittelten Positionsdaten des Kraftfahrzeugs (2) selbst verwendet werden, insbesondere zur Ermittlung einer endgültigen Positionsinformation aus den Positionsdaten und den weiteren Positionsdaten und/oder zur Überprüfung weiterer Positionsdaten und/oder einer aus diesen abgeleiteten Positionsinformation .

6. Verfahren nach einem der vorangehenden Ansprüche,
**dadurch gekennzeichnet,**
**dass** Positionsdaten wenigstens eines nicht dem Kraftfahrzeug (2) entsprechenden Objekts (13) zur Ermittlung einer Kollisionswahrscheinlichkeit mit dem Objekt (13) und/oder wenigstens einer zukünftigen Trajektorie (4) des Kraftfahrzeugs (2) und/oder bei der Erstellung eines Umfeldmodells der Umgebung des Kraftfahrzeugs (2) berücksichtigt werden.

7. Verfahren nach einem der vorangehenden Ansprüche,
**dadurch gekennzeichnet,**
**dass** die insbesondere bereits wenigstens teilweise ausgewerteten Bilddaten zur insbesondere weiteren Auswertung und/oder die Positionsdaten an das Kraftfahrzeug (2) übertragen werden.

8. Verfahren nach Anspruch 7,
**dadurch gekennzeichnet,**
**dass** die wenigstens eine Überwachungskamera (9, 10, 11) mit einer insbesondere einem befahrenen Gebiet zugeordneten Steuereinrichtung (7) verbunden ist, die mit dem Kraftfahrzeug (2) kommuniziert.

9. Verfahren nach einem der vorangehenden Ansprüche,
**dadurch gekennzeichnet,**
**dass** zu durch die wenigstens eine Überwachungskamera (9, 10, 11) detektierten Objekten (13) auch wenigstens eine den Positionsdaten des Objekts (13) zugehörige Objektinformation ermittelt und insbesondere wenigstens teilweise an das Kraftfahrzeug (2) übertragen wird.

10. Verfahren nach Anspruch 9,
**dadurch gekennzeichnet,**
**dass** als Objektinformation eine Objektklasse und/oder eine Identifizierungsinformation und/oder eine Geschwindigkeit und/oder eine Bewegungshistorie und/oder eine Bewegungsvoraussage ermittelt wird.

11. Verfahren nach einem der vorangehenden Ansprüche,
**dadurch gekennzeichnet,**
**dass** der Fahrschlauch an die filternde Einrichtung von dem Kraftfahrzeug (2) übermittelt und/oder vorausberechnet wird.

12. Verfahren nach einem der vorangehenden Ansprüche,
**dadurch gekennzeichnet,**
**dass** als Teil der Positionsdaten eine Orientierung des Objekts (13), auf das sie sich beziehen, durch Auswertung äußerer Merkmale des Objekts (13) ermittelt wird.

13. Verfahren nach Anspruch 12,
**dadurch gekennzeichnet,**
**dass** zur Ermittlung einer Orientierung eines Kraftfahrzeugs (2, 14) als äußere Merkmale ein Nummernschild (18) des Kraftfahrzeugs (2, 14) und/oder die Außenspiegel (17) des Kraftfahrzeugs (2) in den Bilddaten detektiert und analysiert werden.

14. Verfahren nach einem der vorangehenden Ansprüche,
**dadurch gekennzeichnet,**
**dass** als Positionsdaten absolute Positionen in einem geodätischen und/oder auf ein befahrenes Gebiet bezogenen Koordinatensystem ermittelt werden.

15. Verfahren nach einem der vorangehenden Ansprüche,
**dadurch gekennzeichnet,**
**dass** in einem ersten Schritt der Bildverarbeitung auf einen nicht bewegten, statischen, insbesondere angelernten Hintergrund bezogene Bilddaten der weiteren Betrachtung entzogen werden.

16. Verfahren nach einem der vorangehenden Ansprüche,
**dadurch gekennzeichnet,**
**dass** in den insbesondere vom Hintergrund bereinigten Bilddaten Objekte (13) durch Clusterbildung detektiert werden.

17. Verfahren nach einem der vorangehenden Ansprüche,
**dadurch gekennzeichnet,**
**dass** eine Nachverfolgung eines erkannten Objektes (13) in zu verschiedenen Zeitpunkten aufgenommenen Bilddaten unter Verwendung eines Kalman-Filters erfolgt.

18. Verfahren nach einem der vorangehenden Ansprüche,
**dadurch gekennzeichnet,**
**dass** die Auswertung, insbesondere eine Ermittlung von Positionslisten, wenigstens teilweise seitens der Überwachungskamera (9, 10, 11) und/oder einer bzw. der mit der Überwachungskamera (9, 10, 11) verbundenen, insbesondere einem befahrenen Gebiet zugeordneten Steuereinrichtung (7) erfolgt.

19. Verfahren nach einem der vorangehenden Ansprüche,
**dadurch gekennzeichnet,**
**dass** das Verfahren in einer mehrere Parkplätze aufweisenden Parkumgebung, insbesondere einem Parkhaus, ausgeführt wird, dem die Überwachungskameras (9, 10, 11) zugeordnet sind.

20. Verfahren nach einem der vorangehenden Ansprüche,
**dadurch gekennzeichnet,**
**dass** die Überwachungskameras (9, 10, 11) wenigstens einer weiteren Funktion, insbesondere einer Sicherheitsfunktion, dienen.

21. Positionsdatenermittlungs- und -verteilungssystem (19), aufweisend wenigstens eine Überwachungskamera (9, 10, 11), eine Kommunikationseinrichtung (6), eine Steuereinrichtung (7) und eine Auswerteeinrichtung (20), die zur Auswertung von Bilddaten der Überwachungskamera (9, 10, 11) zur Ermittlung der Positionsdaten wenigstens eines erfassten Objekts (13) ausgebildet ist, wobei die Kommunikationseinrichtung (6) zur Übermittlung wenigstens eines Teils der Positionsdaten an ein Kraftfahrzeug (2) ausgebildet ist, das oder wenigstens teilweise dessen Umgebung die Überwachungskamera (9, 10, 11) erfasst, wobei jeder Überwachungskamera (9, 10, 11) eine zum Erstellen von überwachungskameraspezifischen Positionslisten ausgebildete Bildverarbeitungseinheit (21) zugeordnet ist und/oder die Steuereinrichtung (7) zum Erstellen von Positionslisten durch Zusammenfassung von auf gleiche Objekte (13) bezogenen Positionsdaten für alle Überwachungskameras (9, 10, 11) ausgebildet ist, wobei die Positionslisten die Positionsdaten für durch wenigstens eine Überwachungskamera (9, 10, 11) nachverfolgte bewegte Objekte (13) enthalten, wobei die Steuereinrichtung (7) dazu ausgebildet ist, bei einer Übertragung von Positionsdaten nicht dem Kraftfahrzeug (2) entsprechender Objekte (13) als Positionsliste an das Kraftfahrzeug (2) eine für das Kraftfahrzeug (2) unter Verwendung wenigstens eines Relevanzkriteriums gefilterte Positionsliste zu übermitteln, wobei ein einen zukünftigen Fahrschlauch des Kraftfahrzeugs (2) berücksichtigendes Relevanzkriterium derart verwendet wird, dass ein Objekt (13) als relevant angesehen wird, wenn es sich in dem gegebenenfalls um einen Sicherheitsbereich erweiterten Fahrschlauch befindet und/oder zu einem dem Passieren des Kraftfahrzeugs (2) entsprechenden Zeitpunkt mit einer eine Wahrscheinlichkeitsschwelle überschreitenden Wahrscheinlichkeit innerhalb des Fahrschlauchs befinden wird.

## Claims

1. Method for determining position data for use during the operation of a vehicle system (3) of a motor vehicle (2), wherein image data of at least one monitoring camera (9, 10, 11), which records at least part of an environment of the motor vehicle (2) and/or records the motor vehicle (2) and which is provided externally to the motor vehicle (2), are evaluated in order to determine the position data of at least one recorded object (13) and said position data are at least partially provided to the vehicle system (3),
**characterised**
**in that** for each monitoring camera (9, 10, 11) and/or by combining position data relating to the same objects (13) for all monitoring cameras (9, 10, 11), position lists are created which contain the position data for moved objects (13) tracked by at least one monitoring camera (9, 10, 11), wherein when position data of objects (13) that do not correspond to the motor vehicle (2) are transferred to the motor vehicle (2) as a position list, a position list filtered for the motor vehicle (2) using at least one relevance criterion is transmitted, wherein a relevance criterion that takes into account a future driving path of the motor vehicle (2) is used in such a way that an object (13) is considered relevant if it is located in the driving path, possibly expanded to include a safety area, and/or, with a probability exceeding a probability threshold, will be located within the driving path at a point in time corresponding to the motor vehicle (2) passing.

2. Method according to claim 1,
**characterised**
**in that** the vehicle system (3) is a vehicle system (3) designed for at least partially, in particular completely automatic operation of the motor vehicle (2)

3. Method according to claim 1 or 2,
**characterised**
**in that** position data of the motor vehicle (2) itself are determined and transferred to the motor vehicle.

4. Method according to claim 3,
**characterised**
**in that** the motor vehicle (2), on the basis of a distance covered and/or further available position information, in particular sent by the motor vehicle (2), and/or on the basis of at least one external characteristic of the motor vehicle (2), in particular a number plate (18) and/or a type identifier, is identified externally to the motor vehicle in the image data at least of one of the at least one monitoring cameras (9, 10, 11).

5. Method according to claim 3 or 4,
**characterised**
**in that** the position data of the motor vehicle (2) itself are used as redundant information for further position data of the motor vehicle (2) itself determined by the motor vehicle (2), in particular for determining final position information from the position data and the further position data and/or for checking further position data and/or position information derived therefrom.

6. Method according to any one of the preceding claims
**characterised**
**in that** position data of at least one object (13) that does not correspond to the motor vehicle (2) are taken into account for determining a probability of collision with the object (13) and/or for determining at least one future trajectory (4) of the motor vehicle (2) and/or when creating an environmental model of the environment of the motor vehicle (2).

7. Method according to any one of the preceding claims,
**characterised**
**in that** the image data in particular already at least partially evaluated are transferred for in particular further evaluation and/or the position data are transferred to the motor vehicle (2)

8. Method according to claim 7,
**characterised**
**in that** the at least one monitoring camera (9, 10, 11) is connected to a control apparatus (7), in particular associated with a traffic area, which communicates with the motor vehicle (2).

9. Method according to any one of the preceding claims,
**characterised**
**in that** for the objects (13) detected by the at least one monitoring camera (9, 10, 11) at least one object information associated with the position data of the object (13) is also determined and in particular transferred at least partially to the motor vehicle (2).

10. Method according to claim 9,
**characterised**
**in that** an object class and/or identification information and/or a speed and/or a movement history and/or a movement prediction is determined as object information.

11. Method according to any one of the preceding claims,
**characterised**
**in that** the driving path is transmitted to the filtering apparatus by the motor vehicle (2) and/or calculated in advance.

12. Method according to any one of the preceding claims
**characterised**
**in that**, as part of the position data, an orientation of the object (13) to which the data relate is determined by evaluating external features of the object (13).

13. Method according to claim 12,
**characterised**
**in that** to determine an orientation of a motor vehicle (2, 14) a license plate (18) of the motor vehicle (2, 14) and/or the exterior mirrors (17) of the motor vehicle (2) are detected and analysed in the image data as external features.

14. Method according to any one of the preceding claims
**characterised**
**in that** absolute positions in a geodetic coordinate system and/or a coordinate system related to a traffic area are determined as position data.

15. Method according to any one of the preceding claims
**characterised**
**in that** in a first step of image processing, image data relating to a non-moving, static, in particular programmed background are withdrawn from further consideration.

16. Method according to any one of the preceding claims
**characterised**
**in that** objects (13) are detected in the image data, said data being in particular adjusted from the background, by cluster formation.

17. Method according to any one of the preceding claims
**characterised**
**in that** a recognised object (13) is tracked in image data recorded at different points in time using a Kalman filter.

18. Method according to any one of the preceding claims
**characterised**
**in that** the evaluation, in particular a determination of position lists, is carried out at least in part by the monitoring camera (9, 10, 11) and/or a or the control apparatus (7) connected to the monitoring camera (9, 10, 11) and in particular assigned to a traffic area.

19. Method according to any one of the preceding claims
**characterised**
**in that** the method is carried out in a parking environment having a plurality of parking spaces, in particular a parking garage, to which the monitoring cameras (9, 10, 11) are assigned.

20. Method according to any one of the preceding claims
**characterised**
**in that** the monitoring cameras (9, 10, 11) serve at least one further function, in particular a security function.

21. Position-data determining and distributing system (19), having at least one monitoring camera (9, 10, 11), a communication apparatus (6), a control apparatus (7) and an evaluation apparatus (20), which is designed for evaluating image data of the monitoring camera (9, 10, 11) to determine the position data of at least one recorded object (13), wherein the communication device (6) is designed to transmit at least some of the position data to a motor vehicle (2) which, or at least a part of the environment of which, is recorded by the monitoring camera (9, 10, 11), wherein each monitoring camera (9, 10, 11) is assigned an image processing unit (21) designed to create monitoring camera-specific position lists and/or the control apparatus (7) is designed to create position lists by combining position data for all monitoring cameras (9, 10, 11), said data relating to the same objects (13), wherein the position lists contain the position data for moved objects (13) tracked by at least one monitoring camera (9, 10, 11), wherein the control apparatus (7) is designed, when position data of objects (13) that do not correspond to the motor vehicle (2) are transferred to the motor vehicle (2) as a position list, to transmit a position list filtered for the motor vehicle (2) using at least one relevance criterion, wherein a relevance criterion that takes into account a future driving path of the motor vehicle (2) is used in such a way that an object (13) is considered relevant if it is located in the driving path, possibly expanded to include a safety area, and/or, with a probability exceeding a probability threshold, will be located within the driving path at a point in time corresponding to the motor vehicle (2) passing.

## Revendications

1. Procédé de détermination de données de position en vue d'une utilisation lors du fonctionnement d'un système de véhicule (3) d'un véhicule automobile (2), selon lequel des données d'image d'au moins une caméra de surveillance (9, 10, 11), prévue à l'extérieur du véhicule automobile (2), captant au moins une partie d'un environnement du véhicule automobile (2) et/ou le véhicule automobile (2) en vue de déterminer les données de position d'au moins un objet capté (13), sont exploitées et celles-ci sont mises au moins partiellement à la disposition du système de véhicule (3),
**caractérisé en ce**
**que** pour chaque caméra de surveillance (9, 10, 11) et/ou, par une réunion de données de position relatives à des objets identiques (13), pour toutes les caméras de surveillance (9, 10, 11), des listes de positions sont établies, qui contiennent les données de position pour des objets en mouvement suivis à la trace (13) par au moins une caméra de surveillance (9, 10, 11), selon lequel, lors d'une transmission de données de position d'objets (13) ne correspondant pas au véhicule automobile (2), est transmis comme liste de positions au véhicule automobile (2) une liste de positions pour le véhicule automobile (2) filtrée à l'aide d'au moins un critère de pertinence, selon lequel un critère de pertinence prenant en considération un couloir de circulation futur du véhicule automobile (2) est utilisé de façon qu'un objet (13) est considéré comme pertinent s'il se trouve dans le couloir de circulation le cas échéant étendu autour d'une zone de sécurité et/ou se trouvera, à un instant correspondant au passage du véhicule automobile (2), à l'intérieur du couloir de circulation avec une probabilité dépassant un seuil de probabilité.

2. Procédé selon la revendication 1,
**caractérisé en ce**
**que** le système de véhicule (3) est un système de véhicule (3) configuré pour faire fonctionner le véhicule automobile (2) au moins partiellement, en particulier entièrement, de manière automatique.

3. Procédé selon la revendication 1 ou 2,
**caractérisé en ce**
**que** des données de position du véhicule automobile (2) lui-même sont déterminées et transmises à celui-ci.

4. Procédé selon la revendication 3,
**caractérisé en ce**
**que** le véhicule automobile (2) est identifié, de manière externe au véhicule automobile, dans les données d'image d'au moins une des au moins une caméras de surveillance (9, 10, 11), au moyen d'un trajet parcouru et/ou d'une autre information de position présente, en particulier envoyée par le véhicule automobile (2), et/ou à l'aide d'au moins une caractéristique extérieure du véhicule automobile (2), en particulier au moyen d'une plaque d'immatriculation (18) et/ou d'un signe distinctif de type.

5. Procédé selon la revendication 3 ou 4,
**caractérisé en ce**
**que** les positions de données du véhicule automobile (2) lui-même sont utilisées comme information redondante pour d'autres données de position du véhicule automobile (2) lui-même déterminées par le véhicule automobile (2), en particulier pour déterminer une information de position définitive à partir des données de position et des autres données de position et/ou pour contrôler d'autres données de position et/ou une information de position déduite de celles-ci.

6. Procédé selon l'une des revendications précédentes,
**caractérisé en ce**
**que** des données de position d'au moins un objet (13) ne correspondant pas au véhicule automobile (2) sont prises en considération en vue de la détermination d'une probabilité de collision avec l'objet (13) et/ou d'au moins une trajectoire future (4) du véhicule automobile (2) et/ou lors de création d'un modèle d'environnement de l'environnement du véhicule automobile (2).

7. Procédé selon l'une des revendications précédentes,
**caractérisé en ce**
**que** sont transmises au véhicule automobile (2) les données d'image en particulier déjà au moins partiellement exploitées en vue, en particulier, d'une exploitation ultérieure, et/ou les données de position.

8. Procédé selon la revendication 7,
**caractérisé en ce**
**que** la au moins une caméra de surveillance (9, 10, 11) est connectée à un dispositif de commande (7), associé en particulier à une zone fréquentée, qui communique avec le véhicule automobile (2).

9. Procédé selon l'une des revendications précédentes,
**caractérisé en ce**
**que**, pour des objets (13) détectés par la au moins une caméra de surveillance (9, 10, 11), au moins une information d'objet se rapportant aux données de position de l'objet (13) est également déterminée et, en particulier, est transmise au moins partiellement au véhicule automobile (2).

10. Procédé selon la revendication 9,
**caractérisé en ce**
**que**, comme information d'objet, une classe d'objet et/ou une information d'identification et/ou une vitesse et/ou un historique de mouvement et/ou une prédiction de mouvement est déterminé(e).

11. Procédé selon l'une des revendications précédentes,
**caractérisé en ce**
**que** le couloir de circulation est transmis au dispositif filtrant du véhicule automobile (2) et/ou est calculé d'avance.

12. Procédé selon l'une des revendications précédentes,
**caractérisé en ce**
**que**, comme partie des données de position, une orientation de l'objet (13) auquel elles se rapportent est déterminée en exploitant des caractéristiques externes de l'objet (13).

13. Procédé selon la revendication 12,
**caractérisé en ce**
**que**, en vue de déterminer une orientation d'un véhicule automobile (2, 14), comme caractéristiques externes, une plaque d'immatriculation (18) du véhicule automobile (2, 14) et/ou les rétroviseurs extérieurs (17) du véhicule automobile (2) sont détectés et analysés dans les données d'image.

14. Procédé selon l'une des revendications précédentes,
**caractérisé en ce**
**que**, comme données de position, des positions absolues sont déterminées dans un système de coordonnées géodésique et/ou relatif à une zone fréquentée.

15. Procédé selon l'une des revendications précédentes,
**caractérisé en ce**
**que**, dans une première étape du traitement d'images, des données d'image relatives à un arrière-plan immobile, statique, en particulier appris, sont enlevées de la prise en considération ultérieure.

16. Procédé selon l'une des revendications précédentes,
**caractérisé en ce**
**que**, dans les données d'image corrigées en particulier de l'arrière-plan, des objets (13) sont détectés par la formation de groupes.

17. Procédé selon l'une des revendications précédentes,
**caractérisé en ce**
**qu'**un suivi à la trace d'un objet reconnu (13) est réalisé dans des données d'image enregistrées à différents instants à l'aide d'un filtre de Kalman.

18. Procédé selon l'une des revendications précédentes,
**caractérisé en ce**
**que** l'exploitation, en particulier une détermination de listes de positions, est réalisée au moins partiellement à côté de la caméra de surveillance (9, 10, 11) et/ou d'un dispositif de commande (7) respectivement connecté à la caméra de surveillance (9, 10, 11), en particulier associé à une zone fréquentée.

19. Procédé selon l'une des revendications précédentes,
**caractérisé en ce**
**que** le procédé est réalisé dans un environnement de stationnement présentant plusieurs emplacements de stationnement, en particulier dans un parking couvert, auquel les caméras de surveillance (9, 10, 11) sont associées.

20. Procédé selon l'une des revendications précédentes,
**caractérisé en ce**
**que** les caméras de surveillance (9, 10, 11) servent au moins à une autre fonction, en particulier à une fonction de sécurité.

21. Système de détermination et de distribution de données de position (19), présentant au moins une caméra de surveillance (9, 10, 11), un dispositif de communication (6), un dispositif de commande (7) et un dispositif d'exploitation (20), qui est configuré pour exploiter des données d'image de la caméra de surveillance (9, 10, 11) en vue de déterminer les données de position d'au moins un objet capté (13), selon lequel le dispositif de communication (6) est configuré pour transmettre au moins une partie des données de position à un véhicule automobile (2), qui ou dont au moins une partie de l'environnement est capté(e) par la caméra de surveillance (9, 10, 11), selon lequel à chaque caméra de surveillance (9, 10, 11) est associée une unité de traitement d'images (21) configurée pour établir des listes de positions spécifiques à la caméra de surveillance, et/ou le dispositif de commande (7) est configuré pour établir des listes de positions en groupant des données de positions relatives à des objets identiques (13) pour toutes les caméras de surveillance (9, 10, 11), selon lequel les listes de positions contiennent les données de position pour des objets mobiles (13) suivis à la trace par au moins une caméra de surveillance (9, 10, 11), selon lequel le dispositif de commande (7) est configuré pour, lors d'une transmission de données de position d'objets (13) ne correspondant pas au véhicule automobile (2), transmettre au véhicule automobile (2), comme liste de positions, une liste de positions pour le véhicule automobile (2) filtrée à l'aide d'au moins un critère de pertinence, selon lequel un critère de pertinence prenant en considération un couloir de circulation futur du véhicule automobile (2) est utilisé de façon qu'un objet (13) soit considéré comme pertinent s'il se trouve dans le couloir de circulation le cas échéant étendu autour d'une zone de sécurité et/ou se trouvera, à un instant correspondant au passage du véhicule automobile (2), à l'intérieur du couloir de circulation avec une probabilité dépassant un seuil de probabilité.
